# EUROPEAN PATENT SPECIFICATION

(11) **EP 4 335 783 B1**
(45) Date of publication and mention of the grant of the patent: **07.10.2026**
(21) Application number: 22879964.9
(22) Date of filing: 11.08.2022
(51) Int. Cl.: B65G 1/04, B65G 1/137

(54) **THREE-DIMENSIONAL WAREHOUSE STORAGE ARTICLE INSPECTION METHOD AND SYSTEM**
VERFAHREN UND SYSTEM ZUR INSPEKTION EINES DREIDIMENSIONALEN LAGERARTIKELS
PROCÉDÉ ET SYSTÈME D'INSPECTION D'ARTICLE DE STOCKAGE D'ENTREPÔT EN TROIS DIMENSIONS

(30) Priority: 14.10.2021 CN 202111196606
(43) Date of publication of application: 13.03.2024
(73) Proprietor: Beijing Jingdong Qianshi Technology Co., Ltd., Beijing 100176 (CN)
(72) Inventor: LIU, Xu, Beijing 100176 (CN); ZHANG, Xundong, Beijing 100176 (CN); WU, Mingfu, Beijing 100176 (CN); WANG, Xianwang, Beijing 100176 (CN)
(74) Representative: Prüfer & Partner mbB Patentanwälte · Rechtsanwälte
(86) International application number: PCT/CN2022/111625
(87) International publication number: WO 2023/061017

(56) References cited:
- CN-A- 104 114 468
- CN-A- 110 615 223
- CN-A- 110 615 223
- CN-A- 111 361 917
- CN-A- 113 335 827
- CN-A- 113 788 263
- DE-U1- 202019 102 253
- JP-A- 2008 100 774
- US-A1- 2018 370 729

## Description

### FIELD OF THE INVENTION

The present disclosure relates to the field of logistics, and specifically relates to a method and system for inspecting objects stored in a three-dimensional warehouse.

### DESCRIPTION OF RELATED ART

A three-dimensional warehouse is used to store cargoes. A shuttle is used in the three-dimensional warehouse to run in a shuttling manner to take and place cargoes. A control logic of the shuttle taking and placing cargoes is as follows: an upper computer sends a command of taking or placing a cargo, and the shuttle travels to a set cargo location according to the received command to perform an operation of taking or placing the cargo. US20180370729A1 which discloses the preamble of claim 1, relates to a control apparatus. CN110615223A which discloses the preamble of claim 12, relates to a device and method for transferring box bodies.

In actual production, vibrations generated in the process the shuttle travels on a rail for a rack and takes and places cargoes cause actual positions of the cargoes to be deviated from their expected positions. When the shuttle takes a cargo that is deviated from its expected position, it results in bumping into, hitting or failing to get the cargo. When placing a cargo, the shuttle is affected by a nearby cargo deviated from its position. After such a failure occurs, the operation has to be terminated and manual intervention is required, which severely affects the production efficiency.

In order to solve the problem, in the related art, an operation of position adjustment of the shuttle is added before cargo is taken. The specific method is as follows: during production, the shuttle moves to a position for taking a cargo according to a command received; before taking the cargo, it first determines whether the cargo is deviated/tilted; if the cargo is deviated/tilted, the position of the shuttle is adjusted to correspond to the deviated/tilted cargo. Then, the shuttle takes away the cargo.

The inventors found at least the following problem in the prior art: some cargoes in the warehouse have a low taking and placing frequency, and after they are stored for a long period of time, their deviation amounts are too large, they are too close to or in direct contact with other cargoes, and the shuttle is unable to carry out taking and placing operations even if it adjusts its attitude, which makes it impossible to accomplish the cargo taking operation.

### SUMMARY OF THE INVENTION

According to some embodiments of the present disclosure, the present disclosure proposes a method and system for inspecting objects stored in a three-dimensional warehouse, for enabling stored objects in a warehouse to be arranged neatly, and providing convenience for object-taking operations.

The invention provides an inspecting stored objects in a three-dimensional warehouse method, including the following steps:
under a set condition, controlling a shuttle to move to an inspection position;
calculating whether the attitude of a stored object corresponding to the inspection position has been changed; and
if the attitude of the stored object has been changed, using the shuttle to take out the stored object and then place the stored object back to its original position.

In some embodiments, whether the attitude of the stored object corresponding to the inspection position has been changed is calculated by the following steps:
calculating deviation amounts and/or a tilt angle of the stored object;
determining whether the deviation amounts and the tilt angle exceeds a set value; and if the deviation amounts or the tilt angle exceeds the set value, determining that the attitude of the stored object has been changed.

In some embodiments, the tilt angle of the stored object is calculated by the following steps:
detecting a first distance between a first corner of the stored object corresponding to the inspection position and the shuttle, a second distance between a second corner of the stored object and the shuttle, and a third distance the shuttle moves from corresponding to the first corner of the stored object to corresponding to the second corner of the stored object; and
calculating the tilt angle of the stored object based on the first distance, the second distance and the third distance.

In some embodiments, the deviation amounts of the stored object are calculated by the following step:
calculating the deviation amounts of the stored object based on coordinates of the shuttle in a coordinate system of the stored object under inspection, dimensions of the stored object, the tilt angle of the stored object, the first distance, and the second distance.

In some embodiments, the first corner is a corner of the stored object facing toward a passage where the shuttle is located, and the first corner is a corner where the shuttle passes for the first time.

In some embodiments, the second corner is a corner of the stored object facing toward the passage where the shuttle is located, and the second corner is a corner where the shuttle passes for the second time.

In some embodiments, a same distance detection element is used to detect the first distance and the second distance.

In some embodiments, the distance detection element includes a laser ranging module.

In some embodiments, each side of the shuttle is provided with a distance detection element, and each distance detection element is configured to detect stored objects corresponding to inspection positions on one side of the passage.

According to the invention, the inspection positions are positions within the passage, and the stored objects are placed on at least one side of each inspection position.

Further according to the invention, the number of the stored objects located on each side of the inspection position is two or more, and whether the attitudes of the plurality of stored objects located on one side of the inspection position have changed is determined by the following step:
if the attitude of a stored object located on the one side of the passage has not changed, determining that the attitude of each stored objects located on a side of the stored object away from the passage has not changed.

In some embodiments, the inspecting stored objects in a three-dimensional warehouse method further includes the following step:
if the attitude of a stored object located on one side of the passage has been changed, taking the stored object located in the row;
determining whether the attitude of the stored object located in the next row has been changed; and
repeating the above steps until determination for every stored object on the one side of the passage is completed.

In some embodiments, the inspecting stored objects in a three-dimensional warehouse method further includes the following step:
using the shuttle to take away a stored object, in the last row, the attitude of which is determined to have changed, and then place the stored object back to its original position to implement attitude correction of the stored object; and
placing back the stored objects located on the one side of the passage one by one to complete attitude correction of every stored object on the one side of the passage.

In some embodiments, the inspecting stored objects in a three-dimensional warehouse method further includes the following step:
after attitude correction of every stored object corresponding to the inspection position is completed, running the shuttle to the next inspection position with respect to the inspection position to accomplish attitude determination of stored objects for every inspection position.

In some embodiments, the set condition is specifically when the shuttle does not receive an operation command.

The invention also provides a system for inspecting objects stored in a three-dimensional warehouse, including:
a shuttle;
a controller mounted on the shuttle;
a distance detection element mounted on the shuttle and communicatively connected to the controller to detect a distance from the shuttle to a stored object to be inspected;
a positioning element mounted on the shuttle and communicatively connected to the controller so that the shuttle stops to a set inspection position; and a displacement detection element mounted on the shuttle and communicatively connected to the controller to detect a third distance moved by the shuttle;
wherein the system operates by using a method according to the invention.

In some embodiments, the distance detection element is mounted on each side in a width direction of the shuttle.

According to the inspecting stored objects in a three-dimensional warehouse method provided in the above technical solution, an inspection operation is performed on a stored object in a warehouse under a set condition, and when the stored object is detected to be tilted, the attitude of the tilted stored object is corrected by taking the stored object and placing the stored object back to its original position, so that the stored object is arranged neatly, thereby facilitating a subsequent object-taking operation performed by the shuttle. Moreover, when performing an object-taking operation, the shuttle does not need to stop and adjust the attitude of a stored object at all, nor does it need to adjust its own attitude, thus greatly improving the object-taking efficiency.

### BRIEF DESCRIPTIONS OF THE DRAWINGS

Drawings illustrated herein are used for providing further understanding of the present disclosure and form part of the present application, and illustrative embodiments of the present disclosure and description thereof are intended for explaining instead of improperly limiting the present disclosure.
Fig. 1 is a structural diagram of a system for inspecting objects stored in a three-dimensional warehouse provided in some embodiments of the present disclosure.
Fig. 2 is a schematic diagram of relative positions of a shuttle and stored objects when inspecting objects stored in a three-dimensional warehouse method provided in some embodiments of the present disclosure is carried out.
Fig. 3 is a schematic diagram of determining deviation amounts and a tilt angle of a stored object when inspecting objects stored in a three-dimensional warehouse method provided in some embodiments of the present disclosure is carried out.
Fig. 4 is an enlarged diagram at M in Fig. 3.
Fig. 5 is a flow diagram of an inspecting objects stored in a three-dimensional warehouse method provided in some embodiments of the present disclosure.
Fig. 6 is a flow diagram of determining whether the attitude of a stored object has been changed.
Fig. 7 is a flow diagram of calculating deviation amounts and a tilt angle.
Fig. 8 is a schematic diagram of deviation amounts of a stored object.

Reference numerals: 1, shuttle; 2, distance detection element; 3, positioning element; 4, controller; 5, displacement detection element.

### DESCRIPTION OF THE INVENTION

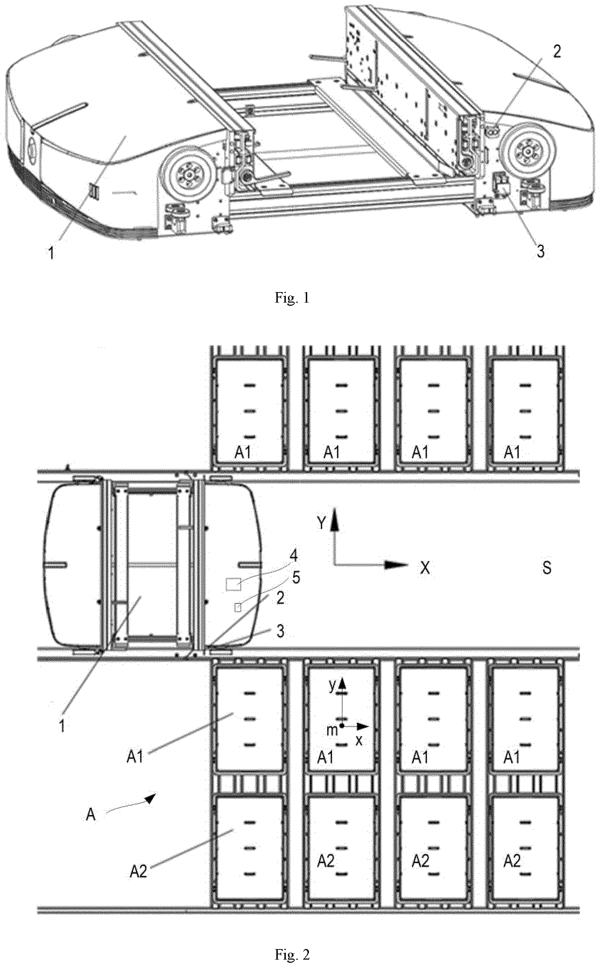

Technical solutions provided in the present disclosure are described in more detail below in conjunction with Figs. 1 to 8.

A large quantity of stored objects A are stored in a warehouse. The stored objects A are, for example, cargoes, pallets or other containers. For ease of description, pallets A are used as an example of the stored objects below. These technical solutions are also applicable for pallets or other containers, as long as these stored objects A have a definite shape and order of placement. These stored objects in the warehouse are placed in rows. Between two adjacent rows of stored objects A is provided a passage S for a shuttle 1 to run through. The shuttle 1 runs for the purpose of taking a stored object A located at a particular inspection position according to a command, or placing a received stored object A to an inspection position in the warehouse. In technical solutions in some embodiments of the present disclosure, the control logic of the shuttle 1 in the warehouse is changed, and operations of the shuttle 1 are divided into two categories. A first category is related to operation time for the shuttle 1. In the operation time, the shuttle 1 performs normal operations, i.e., the shuttle 1 performs object placing and taking operations according to received order information. A second category is related to non-operation time for the shuttle 1. During the non-operation time, the shuttle 1 does not receive any order information about taking and placing an object. During the non-operation time, the shuttle 1 is in an idle state. This non-operation time may be non-working time at night, or free time between two orders. In technical solutions in some embodiments of the present disclosure, an inspection operation is added for the shuttle 1 in the non-operation time. Specifically, when the shuttle 1 does not receive a command, i.e., when the shuttle 1 is in a standby state or in an idle state, it automatically moves within the warehouse to carry out an inspection operation on the existing stored objects in the warehouse. If the attitude of a stored object is found to have changed, the attitude of the stored object A is corrected by taking the stored object and placing back the stored object A. Since the precision of the operation of placing the stored object by the shuttle 1 is very high, accurate positioning of the stored object A whose attitude has been changed is accomplished very precisely by the taking and placing operations of the shuttle 1, which reduces or even avoids a situation in which the stored object is excessively tilted or excessively deviated, and there is no need to provide additional equipment for correcting the attitude of stored objects.

The inspection operation of the shuttle 1 is performed during non-operation time periods, i.e., it is accomplished when the shuttle 1 does not perform object taking and placing operations, so it does not affect the operation efficiency of placing and taking stored objects in the entire warehouse. Moreover, since the attitudes of the stored objects in the warehouse are inspected and adjusted, the shuttle 1 does not need to stop and adjust its own attitude to adapt to tilted or deviated stored objects when performing operations (placing and taking stored objects), nor does it need to adjust the attitudes of the stored objects in other ways. Moreover, the operation of the shuttle 1 taking stored objects is very consecutive, and the object-taking efficiency is very high. Technical solutions in some embodiments of the present disclosure are described in detail below.

Referring to Figs. 1 to 5, some embodiments of the present disclosure provide inspecting objects stored in a three-dimensional warehouse method, including the following steps.

Step S100: under a set condition, controlling a shuttle 1 to move to an inspection position. In some embodiments, the set condition is specifically when the shuttle 1 does not receive an operation command. This inspection method is performed during gaps between times of performing operations by the shuttle, i.e., when object picking and cargo placing operations are not carried out, so it does not occupy working time of the shuttle 1. Moreover, existing shuttles 1 in the warehouse are utilized for inspection, and additional inspection equipment is not needed.

The shuttle 1 itself has a guiding function and a positioning function. These functions also play a role in an inspection process. The shuttle 1 utilizes its guiding function and positioning function to implement placing and taking stored objects A. The shuttle 1 takes a stored object A to a vehicle body and then place it in place as required except in an extreme situation where the attitude of the stored object is too oblique/the stored object is too close to another stored object A does not occur. By the taking and placing operations, the position of the stored object A is accurate. A specific operation processes in which the shuttle 1 stores/takes the stored object A is a normal operational function of the shuttle 1, and will not be described here.

A number of passages S are provided in the warehouse. The number of passages inspected by each shuttle 1 are set according to the number of idle shuttles 1 and an idle frequency of each shuttle 1. For example, if a shuttle 1 is a standby shuttle 1 and has a high idle frequency, then a long inspection operation time is set for the shuttle 1. For each shuttle 1, since inspection operations are carried out during idle time of the shuttle 1, the shuttle 1 does not need to complete an inspection operation of a set number of stored objects A at each time of inspection operation, nor does it need to complete inspection of every stored object A in a passage S at each time of inspection. If the shuttle 1 is idle for a long time, inspection time of the shuttle 1 is correspondingly also long; if the shuttle 1 is idle for a short time, inspection time of the shuttle 1 is correspondingly also short.

One or more rows of stored objects A are provided on each side of a passage S. For example, in a top view shown in Fig. 2, one row of stored objects A is provided on one side of a passage S, and two rows of stored objects A are provided on the other side of the passage S. For ease of description, an XY coordinate system is established in Fig. 2, with X denoting a length direction of the passage S, which is also a movement direction of a shuttle 1. A direction Y is a direction of placement depths of stored objects A. Each passage S is divided into a plurality of inspection positions, each of which corresponds to an X value in the XY coordinate system. Based on Y values in the XY coordinate system, the position corresponding to the X value is divided into a plurality of cargo locations, with a stored object A being placed in each cargo location. For example, in Fig. 2, a position where a shuttle 1 is located corresponds to three stored objects A1, A2 and A1. Here, to facilitate distinguishing inspection positions, the position where the shuttle 1 is located refers to an X-axis position at which a distance detection element 2 mounted on the shuttle 1 is directed. The inspection positions are positions where patrolling is performed in the passage S to detect attitudes of stored objects. The inspection positions are same as operating positions when a shuttle 1 performs normal operations of taking objects and placing cargoes. In some embodiments, a stored object A is placed on at least one side of each inspection position. It is to be noted that the schematic top view of a warehouse provided in Fig. 2 is only intended to illustrate technical solutions in some embodiments of the present disclosure, and is not intended to be limiting. In actual situations, a plurality of rows of stored object A may be provided on each side of the passage S.

A movement command for a shuttle 1 is from a controller 4 of the shuttle 1 itself. The controller 4 is configured to determine whether there is an operation command for the shuttle 1 in a current period of time, such as 10 or 20 minutes. If there is no operation command, the shuttle 1 performs an inspection operation, and the shuttle 1 moves to an inspection position randomly or based on a set sequence. The shuttle 1 randomly selects a passage S to start an inspection operation. Alternatively, the shuttle 1 selects a passage S based on a set sequence to perform an inspection operation. The set sequence is, for example, to select a passage S closest to a position where the shuttle 1 is currently located to start an inspection operation. To perform the inspection operation in this way, the shuttle 1 needs to move a short distance to an inspection position for a shortest time. Alternatively, based on an arrangement sequence of passages S, the inspection operation is started from the first passage S, or the inspection operation is started from the last passage S. Alternatively, an inspection sequence is determined based on a use frequency of each passage S. Specifically, for example, the inspection operation is started from a passage S where placing and taking operations are most frequent, which enables stored objects A in the passage S to be arranged more neatly and ensures that subsequent placing and taking operations of the stored objects A in the passage S are smoother . Alternatively, the inspection operation is started from a passage S with least placing and taking operations, which can ensure that interference or other mutual influence with other shuttles 1 performing operations is not liable to occur during the inspection operation.

For passages S with different frequencies of placing and taking operations, frequencies of inspection operations performed therein are not same. For passages S with frequent placing and taking operations, the number of inspection times is greater. For passages S with very low frequencies of placing and taking operations, inspection operations are performed at low frequencies.

For stored objects A in different cargo locations in a same passage S, frequencies of inspection operation are set according to placing and taking frequencies of the stored objects A in the cargo locations. For stored objects A in cargo locations that placing and taking operations are frequent, if the stored objects A in the cargo locations are tilted, the placing and taking operations of shuttles 1 is influenced greatly. Therefore, inspection operations on the stored objects A in these cargo locations are increased to improve the reliability of normal object-taking operations of the shuttles 1. An inspection cycle is set for stored objects A in cargo locations that placing and taking operations are infrequent. For example, if the stored objects A in the locations are stored/taken once a week, a period in the previous week is set as inspection time. In this way, the inspection workload of shuttles 1 is reduced, and the inspection efficiency of the shuttles 1 is maximized.

Shuttles 1 performing inspection operations are shuttle 1 for non-operation time periods. In this way, additional inspection equipment is not needed in the warehouse, and the use of existing equipment in the warehouse is maximized, so that inspection operations are accomplished without additional vehicles in the warehouse, thus greatly increasing the probability of neat placement of stored objects in the warehouse, and increasing the operating efficiency of the shuttles 1 in operation time, and the object placing and taking efficiency in the warehouse is obviously improved.

Step S200, calculating whether the attitude of a stored object A corresponding to the inspection position has been changed.

As described above, there are be stored objects A on both sides of an inspection position. An inspection sequence of the stored objects A is, for example, one-by-one inspection. For example, using directions shown in Fig. 2 as an example, the stored objects A shown below the passage S in Fig. 2 are first inspected for a change in attitude; then the stored objects A shown above the passage S in Fig. 2 are inspected for a change in attitude.

The change in attitude means that when the shuttle 1 performs inspection, the stored object is different with the attitude when the stored object was originally placed. Situations in which the attitude has been changed include a situation in which the stored object has translated or rotated, or a situation in which it has both translated and rotated.

There are various ways to determine whether the attitude of a stored object A has been changed. One way is determination by using pictures. For example, pictures of the stored object A to be determined are taken by using an image inspection element such as a camera, and the pictures are analyzed and calculated to determine whether the attitude of the stored object A has been changed. The other way is determination by distance detection. The stored object A is a cuboidal or cubic stored object of a regular shape, and in the case where the stored objects A are neatly placed, a side surface of the stored object A facing toward the passage S is parallel to the length direction of the passage S. Based on detecting distances from several points on the side surface of the stored object A to the passage S, the attitude of the stored object A can be obtained by calculation, thereby implementing the determination of whether the attitude of the stored object A has been changed.

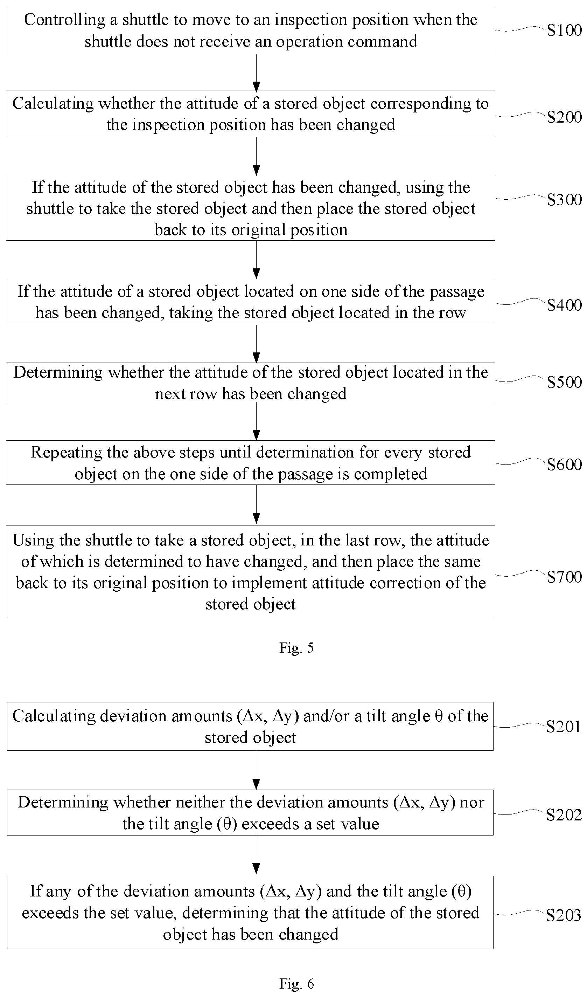

Referring to Fig. 6, in some embodiments, step S200 is specifically implemented by using the following steps.

Step S201, calculating deviation amounts (Δx, Δy) and/or a tilt angle θ of the stored object.

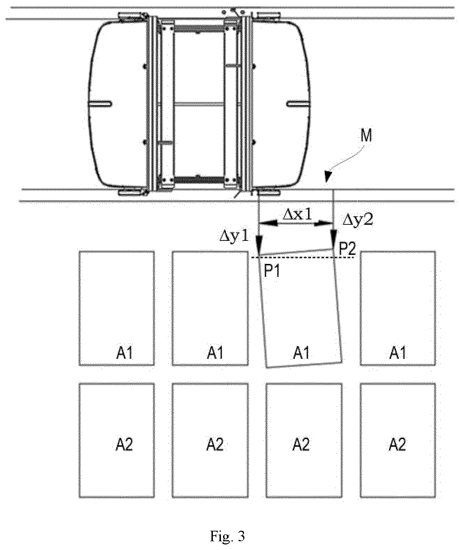

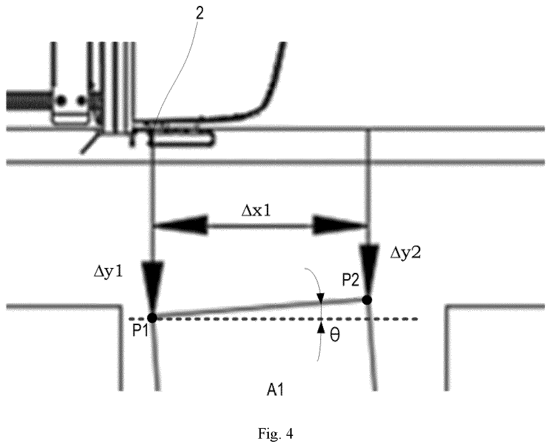

Referring to Figs. 3 and 4, the deviation amounts are amounts by which the stored object is deviated from original coordinate values in the direction x and the direction y relative to an original state. The tilt angle θ is an angle by which the stored object is rotated relative to the original state. The original state is parameters that correspond to a correct attitude of the stored object when it was initially placed in the cargo location.

In plan views illustrated in Figs. 2 and 3, to clearly depict stored objects A located in an XY plane (the stored objects illustrated in the figures are cargoes), a local coordinate system, i.e. an xy coordinate system, is defined for each stored object A. An origin m of the local coordinate system coincides with a reference point (e.g., a centroid) of the stored object A. An x-coordinate axis is parallel to short sides of the stored object A and is fixed, and a y-coordinate axis is parallel to long sides of stored object A and is fixed. Here, the short sides of the stored object A are perpendicular to the long sides of the stored object A. Coordinates (x, y) of the origin m of the local coordinate system in the global coordinate system XY denote the position of the stored object A. An included angle θ between the x-axis (or y-axis) of the local coordinate system and the X-axis (or Y-axis) of the global coordinate system denotes the angle (attitude) of the stored object A. A complete description of the position and the attitude of the stored object A in the plane may be provided by using the coordinates (x, y) and the included angle θ. In the case of a change in the coordinates (x, y), the deviation amounts are amounts of change between the coordinates of the origin m before and after the change, i.e. (Δx, Δy). In the case of a change in the included angle θ, the tilt angle is an amount of change between the included angles before and after the change, i.e. Δθ. A change in the position and/or the attitude of the stored object may be only a change in the position (x, y) without a change in the included angle θ, i.e., translation, or a change in the included angle θ without a change in the position (x, y), i.e., rotation, or a change in both.

Herein, the deviation amounts (Δx, Δy) and the tilt angle θ are calculated by measuring Δy1, Δy2, and Δx1, in conjunction with position information and dimensional parameters of the shuttle itself.

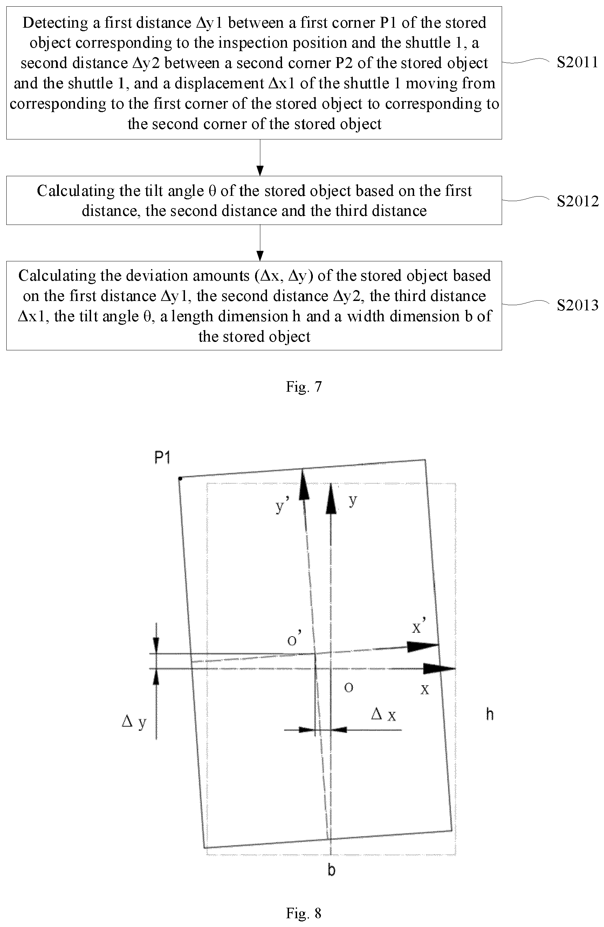

Referring to Fig. 7, in some embodiments, the tilt angle and the deviation amounts of the stored object are calculated by the following steps.

Step S2011, detecting a first distance Δy1 between a first corner P1 of the stored object A corresponding to the inspection position and the shuttle 1, a second distance Δy2 between a second corner P2 of the stored object A and the shuttle 1, and a third distance Δx1 the shuttle 1 moves from corresponding to the first corner P1 of the stored object A to corresponding to the second corner P2 of the stored object.

In some embodiments, the first corner P1 is a corner of the stored object facing toward a passage S where the shuttle 1 is located, and the first corner P1 is a corner where the shuttle 1 passes for the first time.

In some embodiments, the second corner P2 is a corner of the stored object facing toward the passage S where the shuttle 1 is located, and the second corner P2 is a corner where the shuttle 1 passes for the second time.

The measurement of the third distance Δx1 is specifically implemented by using a displacement detection element 5 on the shuttle 1.

Step S2012, calculating the tilt angle θ of the stored object A based on the first distance, the second distance and the third distance.

The tilt angle θ of the stored object A may be calculated by using the following formula (1): $θ = arctan \frac{Δ y 1 - Δ y 2}{Δx 1}$

Step S2013, calculating the deviation amounts (Δx, Δy) of the stored object A based on the first distance Δy1, the second distance Δy2, the third distance Δx1, the tilt angle θ, a length dimension h and a width dimension b of the stored object A. The deviation amounts (Δx, Δy) are calculated by formula (2) as follows: $\left[\begin{matrix}Δ x \\ Δ y \\ 0\end{matrix}\right] = \left[\begin{matrix}x 1 \\ y 1 - Δ y 1 \\ 0\end{matrix}\right] - \left[\begin{matrix}cos θ & - sin θ & 0 \\ sin θ & cos θ & 0 \\ 0 & 0 & 1\end{matrix}\right] \left[\begin{matrix}- \frac{b}{2} \\ \frac{h}{2} \\ 0\end{matrix}\right]$

Referring to Fig. 8, in the formula, x1 and y1 are coordinates of a laser ranging module on the shuttle 1 in the xoy coordinate system, the xoy coordinate system coincides with the centroid of the stored object A under inspection, and (x1, y1-Δy1) are coordinates of the first corner P1 point of the stored object A in the xoy coordinate system.

After the deviation amounts of the stored object A are calculated according to formula (2), if any of Δx and Δy exceeds a set value, it is determined that the stored object A is deviated, which needs to be corrected subsequently by the taking and placing operations of the shuttle 1. Here, the set values of the deviation amounts along the directions x and y are set respectively, or are the same.

In some embodiments, each side of the shuttle 1 is provided with a distance detection element 2, and each distance detection element 2 is configured to detect stored objects A corresponding to inspection positions on one side of the passage S. The distance detection element 2 is, for example, a laser ranging module. In practical applications, a specific detection process is as follows.

The shuttle 1 travels within the passage S in the length direction of the passage S, i.e. in the direction X. The laser ranging module transmits a laser signal in the direction of the stored object A1. After laser is radiated on the stored object A1, it is reflected by the stored object A1, and the laser ranging module receives the laser signal of the laser reflected back from the stored object A1. A distance between the laser ranging module and the stored object A1 is calculated based on time when the laser signal is received, and a propagation speed of the laser itself. The processor receives the distance value and compares it with a system preset value. A difference between the distance value and the preset value is defined as an error value. If the error value is within the range of the preset error value E1, the shuttle 1 continues traveling. After the laser ranging module measures distance from the two corners of the stored object to the laser ranging module respectively, the measurement ends; at that time, the laser ranging module has moved with the shuttle 1 to a position where no reflected signal from the stored object can be received. If testing shows that the calculated error value exceeds the preset error value E1 during the process of measuring the distances from the two corners of the stored object to the laser ranging module by the laser ranging module, the shuttle 1 stops. The deviation amounts and the tilt angle of the stored object may be calculated by using the computational scheme described above, in conjunction with the values measured by the laser ranging module.

The distances Δy1 and Δy2 between the laser ranging module and the stored object A1 may be obtained during the process from the laser ranging module starting receiving the reflected signal within the range of the preset error E1 to stopping receiving the signal. Using the displacement detection element 5 provided on the shuttle 1, a distance traveled by the shuttle 1, i.e., the distance Δx1 between the leftmost and the rightmost sides of a surface of the stored object A1 close to the shuttle 1, is calculated, as shown in Fig. 3. At that time, the stored object A1 may be at a normal position and angle, or may be deviated in parallel, or deviated rotationally, or deviated both in parallel and rotationally. The deviation amounts of the stored object A1 are determined in conjunction with the state of a positioning sensor and the value from the displacement detection element 5.

Step S202, determining whether neither the deviation amounts nor the tilt angle exceeds a set value.

Step S203, if any of the deviation amounts and the tilt angle θ exceeds the set value, generating a determination result that the attitude of the stored object has been changed.

Step S300, if the attitude of the stored object has been changed, using the shuttle 1 to take away the stored object A and then place the stored object A back to its original position, to implement correction of the attitude of the stored object A.

The attitude of the stored object A is determined according to the calculation formulas of the deviation amounts and the tilt angle, and if the determination result is that the attitude of the stored object A has been changed, the shuttle 1 is used to take away the stored object A and then place the stored object A back to its original position, to implement correction of the position of the stored object A. When the shuttle 1 places the stored object A, the stored object A is placed back to its original position with a high precision. Thus, it automatically implements correction of the attitude of the stored object A, so that the shuttle 1 takes the stored object A very smoothly during subsequent normal operation.

In some embodiments, the number of the stored objects A located on each side of the inspection position is two or more, and whether the attitudes of the plurality of stored objects A located on one side of the inspection position have changed is determined by the following step: if the attitude of a stored object A located on the one side of the passage S has not changed, determining that the attitude of each stored object A located on a side of the stored object A away from the passage S has not changed.

Reversely, if the attitude of a certain stored object A is determined to have changed, the attitudes of the rest of the stored objects A are determined by the following method. Specifically, in some embodiments, the inspecting stored objects in a three-dimensional warehouse method further includes the following steps:

Step S400, if the attitude of a stored object A located on one side of the passage S has been changed, taking the stored object located in the row. The stored object A taken is temporarily stored in the shuttle 1, or placed in a vacant cargo location in the passage S or a nearby passage S.

Step S500, determining whether the attitude of a stored object A located in the next row has been changed. Since stored object, in the previous row, that blocks the stored object A is taken, the stored object A to be determined directly faces toward the shuttle 1, and the distance detection element 2 on the shuttle 1 performs measurement directly. Thus, the determination method for each stored object A is same as described above.

Step S600, repeating the above steps until determination for every stored object A on the one side of the passage S is completed.

Referring to Figs. 2 and 3, in situations where there are a plurality of stored objects A below the passage S, a stored object A closer to the passage S is inspected first, and then a stored object A farther from the passage S is inspected. Of course, if the inspection shows that a stored object A closer to passage S is not tilted, then because a stored object A farther from the passage S is less prone to external disturbance, inspection is not needed at that time, and it is determined directly that the stored object A farther from the passage S is not tilted as well. In this way, the inspection workload of the shuttle 1 is reduced, and the inspection efficiency is improved.

If the inspection generates a result that the attitude of a stored object A closer to the passage S has been changed, e.g. A1 is tilted, then it needs to further inspect whether the attitude of a stored object A2 located on the side of the stored object A1 away from the passage S has been changed. The inspection method is: first moving the stored object A1 to a vacant cargo location in the warehouse to expose the stored object A2 to be inspected. Then the stored object A2 is inspected for a change in attitude in the same way as the inspection of the stored object A1. If the inspection generates a result that the stored object A2 is also tilted, then the stored object A2 is first moved to a vacant cargo location in the warehouse to expose a stored object A3 to be inspected. Then whether the attitude of the stored object A3 has been changed is detected in the same way as the detection of the stored objects A1 and A2. If the detection generates a result that the stored object A3 is not tilted, then it does not need to continue to detect whether the attitude of a stored object A4 located on a side of the stored object A3 away from the passage S has been changed, but it is directly determined that the stored object A4, and every rest stored object located on a side of the stored object A4 away from the passage S are not tilted. If the detection generates a result that the stored object A3 is tilted, then it needs to continue to detect whether the attitude of the stored object A4 located on the side of the stored object A3 away from the passage S has been changed. The method described above is used to accomplished detection of every stored object on one side of the passage S, or until a stored object is detected to be not tilted. It should be noted that, as described above, there are a number of passages S in the warehouse, and the passage S mentioned in the above detection process refers to a passage S in which the shuttle 1 for detecting stored objects corresponding to the passage S is located, and does not refer to other passages that are not related to the inspection operation of the shuttle 1.

Description is given below in conjunction with two columns of stored objects illustrated in Figs. 2 and 3.

In Figs. 2 and 3, there are two stored objects A, i.e. a stored object A1 and a stored object A2, in a depth direction, i.e., the direction Y. First, deviation amounts and a deviation angle of the stored object A1 may be determined based on distance values measured by a laser ranging module, a distance between leftmost and rightmost sides of a surface of the stored object A1 close to the shuttle 1, and the state of a positioning sensor.

According to measured engineering data, the deviation amounts and the deviation angle of the stored object A1 are greater than corresponding values of A2. Therefore, if the deviation amounts and the deviation angle of the stored object A1 are within an allowable error range, neither the stored object A1 nor the stored object A2 needs to be repositioned.

If the deviation amounts and the deviation angle of the stored object A1 are beyond the allowable error range, the shuttle 1 is first adjusted to take away the stored object A1 and place it onto the vehicle for temporary storage, and then the deviation amounts and the deviation angle of the stored object A2 are detected by the shuttle 1.

If the deviation amounts and the deviation angle of the stored object A2 are within the allowable error range, it does not need to be repositioned, and the stored object A1 is directly placed into its cargo location to achieve repositioning.

If the deviation amounts and the deviation angle of A2 are outside the error allowable range, the shuttle 1 first places the stored object A1 into another vacant cargo location for temporary storage, then repositions the stored object A2, and finally places the stored object A1 back to the cargo location to which it belongs to achieve repositioning.

In this process, stored objects A on the opposite side of the passageway are inspected by using a laser ranging module on the other side of the shuttle 1, the process and principle are same, and at that point, the inspection of this column of stored objects is completed, and inspection of the next column may be carried out.

In some embodiments, the inspecting stored objects in a three-dimensional warehouse method further includes the following steps.

Step S700, using the shuttle 1 to take away a stored object, in the last row, the attitude of which is determined to have changed, and then place the same back to its original position to implement attitude correction of the stored object A.

The process of correcting the attitudes of the stored objects A is reverse to order of determining the attitudes of the stored objects A. That is, in attitude determination of the stored objects A, the attitudes of stored objects A closer to the passage S are determined first, and then the attitudes of stored object A farther from the passage S are determined; and in attitude correction of the stored objects A, since the correction is performed by repositioning the stored objects A, stored objects A farther from the passage S are placed back first, and then stored objects A closet to the passage S are placed back.

Step S900, placing back the stored objects A located on the one side of the passage S one by one to complete attitude correction of every stored object A on the one side of the passage S.

In some embodiments, the inspecting stored objects in a three-dimensional warehouse method further includes the following step.

Step S1000, after attitude correction of every stored object A corresponding to the inspection position is completed, running the shuttle 1 to the next inspection position with respect to the inspection position to accomplish attitude determination of stored objects A for every inspection position.

In the case of a particularly large throughput in the three-dimensional warehouse, there is a shuttle 1 on each layer of each passageway, and each shuttle 1 inspects the passageway where it is located, so the inspection operation is not time-consuming. Moreover, in the case of a large throughput, fewer stored objects A have not been taken and placed for a long time, and fewer stored objects A are beyond their set values, so inspection is faster. The above technical solution of the present disclosure does not influence normal operations of the shuttle 1, but rather utilizes intervals between the normal operations of the shuttle 1. In normal work, the shuttle 1 runs back and forth constantly to take and place the stored objects A. After normal work is completed, there is a period of time in which there are no operating tasks and the shuttle 1 is in an idle state. In the above technical solution, this period of free time is utilized to perform inspection automatically, so it does not interfere with the normal operations of the shuttle 1, and there is no need to take additional time to perform the inspection operation separately.

In the above technical solution, the inspection work of the shuttle 1 is carried out between waves of stock-in and stock-out operations or after the completion of operations. An inspection plan is made according to the busyness of the system, and the inspection work is automatically performed under the scheduling of the system, so that the positional state of each stored object A can be updated in a timely manner, and excessive deviations of certain stored objects A, which have not been taken and placed for a long time, due to rack vibrations are avoided as much as possible, so that each stored object A is taken and placed smoothly in normal stock-in and stock-out operations, that is to say, the taking and placing cycle of each stored object A is shortened, so that the deviation of each stored object A does not accumulate to go beyond the allowable range as a result of not having been taken and placed for a long time. It is also for this reason that the aforementioned inspection work is accomplished normally due to the absence of stored objects A with excessive deviation amounts, so the whole inspection operation achieves prevention of problems before they occur and improves the stability of the system.

Some embodiments of the present disclosure also provide a system for inspecting objects stored in a three-dimensional warehouse, configured to performing the inspecting stored objects in a three-dimensional warehouse method provided in any of embodiments of the present disclosure. The system for inspecting objects stored in a three-dimensional warehouse includes a shuttle 1, a controller 4, a distance detection element 2, a positioning element 3, and a displacement detection element 5. The controller 4 is mounted on the shuttle 1. The distance detection element 2 is mounted to the shuttle 1 and communicatively connected to the controller 4 to detect a distance from the shuttle 1 to a stored object A to be detected. The positioning element 3 is mounted on the shuttle 1 and communicatively connected to the controller 4 so that the shuttle 1 stops at a set cargo location. The displacement detection element 5 is mounted on the shuttle 1 and communicatively connected to the controller 4 to detect a third distance of the shuttle 1.

In some embodiments, the distance detection element 2 is mounted on each side in a width direction of the shuttle 1. The width direction of the shuttle 1 is the direction of the width of the shuttle 1 itself, and in the XY coordinate system established in Fig. 2, it means that the width direction of the shuttle 1 is parallel to the direction Y. Referring to Fig. 2, two distance detection elements 2 are mounted on the shuttle 1, wherein one distance detection element 2 correspondingly detects eight stored objects A on one side of the shuttle 1, and the other distance detection element 2 correspondingly detects four stored objects on the other side of the shuttle 1. Of course, the number of stored objects here is for illustrative purpose only, and in actual situations, the number of stored objects may be much greater than that illustrated. The distance detection element 2 is specifically, for example, a laser ranging module. The laser ranging module performs measurement quickly and with high precision.

For the functions of the components, the execution process of the inspection operation and the technical effects, please refer to the content described above, which will not be repeated here.

In description of the present disclosure, it needs to be appreciated that orientation or position relations denoted by the terms "center", "longitudinal", "transverse", "front", "rear", "left", "right", "vertical", "horizontal", "top', "bottom", "inner", "outer" and the like are orientation or position relations illustrated based on the drawings, are merely for the convenience of describing the present disclosure and simplifying description, instead of indicating or implying the denoted devices or elements necessarily have specific orientations or be constructed and operated in specific orientations, and thus the terms cannot be construed as limiting the protection scope of the present disclosure.

Finally, it is to be noted that the above embodiments are only used for describing rather than limiting the technical solutions of the present disclosure. Although the present disclosure is described in detail with reference to the preferred embodiments, those of ordinary skill in the art should understand that they still can make modifications to the specific implementations in the present disclosure or make equivalent substitutions to part of technical features thereof.

## Claims

1. A method for inspecting objects stored in a three-dimensional warehouse, comprising the following steps:
under a set condition, controlling a shuttle (1) to move to an inspection position;
calculating whether an attitude of a stored object (A) corresponding to the inspection position has been changed; and
if the attitude of the stored object (A) has been changed, using the shuttle (1) to take away the stored object (A) and then place the stored object (A) back to its original position;
wherein the inspection positions are positions within a passage (S), and the stored objects (A) are placed on at least one side of each inspection position;
wherein the number of the stored objects (A) located on each side of the inspection position is two or more, and
**characterized in that**
whether the attitudes of the plurality of stored objects (A) located on one side of the inspection position have changed is determined by the following step:
if the attitude of a stored object (A) located on the one side of the passage (S) has not changed, determining that the attitude of each stored objects (A) located on a side of the stored object (A) away from the passage (S) has not changed.

2. The method for inspecting objects stored in a three-dimensional warehouse according to claim 1, wherein whether the attitude of the stored object (A) corresponding to the inspection position has been changed is calculated by the following steps:
calculating deviation amounts and/or a tilt angle (8) of the stored object (A);
determining whether neither the deviation amounts nor the tilt angle (θ) exceeds a set value; and
if any of the deviation amounts and the tilt angle (θ) exceeds the set value, determining that the attitude of the stored object (A) has been changed.

3. The method for inspecting objects stored in a three-dimensional warehouse according to claim 1 or 2, wherein the tilt angle (θ) of the stored object (A) is calculated by the following steps:
detecting a first distance between a first corner of the stored object (A) corresponding to the inspection position and the shuttle (1), a second distance between a second corner of the stored object (A) and the shuttle (1), and a third distance the shuttle (1) moves from corresponding to the first corner of the stored object (A) to corresponding to the second corner of the stored object (A); and
calculating the tilt angle (θ) of the stored object (A) based on the first distance (Δy1), the second distance (Δy2) and the third distance (Δx1).

4. The method for inspecting objects stored in a three-dimensional warehouse according to claim 3, wherein the deviation amounts of the stored object (A) are calculated by the following step:
calculating the deviation amounts of the stored object (A) based on coordinates of the shuttle (1) in a coordinate system of the stored object under inspection, dimensions of the stored object (A), the tilt angle (θ) of the stored object (A), the first distance (Δy1), and the second distance (Δy2).

5. The method for inspecting objects stored in a three-dimensional warehouse according to claim 3 or 4, wherein the first corner (P1) is a corner of the stored object (A) facing toward a passage (S) where the shuttle (1) is located, and the first corner (P1) is a corner where the shuttle (1) passes for the first time.

6. The method for inspecting objects stored in a three-dimensional warehouse according to any one of claims 3 to 5, wherein the second corner (P2) is a corner of the stored object (A) facing toward the passage (S) where the shuttle (1) is located, and the second corner (P2) is a corner where the shuttle (1) passes for the second time.

7. The method for inspecting objects stored in a three-dimensional warehouse according to any one of claims 3 to 6, wherein a same distance detection element (2) is configured to detect the first distance (Δy1) and the second distance (Δy2);
wherein the distance detection element (2) comprises a laser ranging module.

8. The method for inspecting objects stored in a three-dimensional warehouse according to any one of claims 3 to 7, wherein each side of the shuttle (1) is provided with a distance detection element (2), and each distance detection element (2) is configured to detect stored objects (A) corresponding to inspection positions on one side of the passage (S).

9. The method for inspecting objects stored in a three-dimensional warehouse according to claim 1, further comprising the following steps:
if the attitude of a stored object (A) located on one side of the passage (S) has been changed, taking the stored object (A) located in the row;
determining whether the attitude of the stored object (A) located in the next row has been changed; and
repeating the above steps until determination for every stored object (A) on the one side of the passage (S) is completed.

10. The method for inspecting objects stored in a three-dimensional warehouse according to claim 1 or 9, further comprising the following steps:
using the shuttle (1) to take away a stored object (A), in the last row, the attitude of which is determined to have changed, and then place the same back to its original position to implement attitude correction of the stored object (A); and
placing back the stored objects (A) located on the one side of the passage (S) one by one to complete attitude correction of every stored object (A) on the one side of the passage (S).

11. The method for inspecting objects stored in a three-dimensional warehouse according to any one of claims 1 to 10, further comprising the following step:
after attitude correction of every stored object (A) corresponding to the inspection position is completed, running the shuttle (1) to the next inspection position with respect to the inspection position to accomplish attitude determination of stored objects (A) for every inspection position.

12. A system for inspecting objects stored in a three-dimensional warehouse, comprising:
a shuttle (1);
a controller (4) mounted on the shuttle (1);
a distance detection element (2) mounted on the shuttle (1) and communicatively connected to the controller (4) to detect a distance from the shuttle (1) to a stored object to be inspected;
a positioning element (3) mounted on the shuttle (1) and communicatively connected to the controller (4) so that the shuttle (1) stops to a set inspection position; and
a displacement detection element (5) mounted on the shuttle (1) and communicatively connected to the controller (4) to detect a third distance moved by the shuttle (1);
**characterized in that** the system operates by using a method according to any one of the preceding claims.

13. The system for inspecting objects stored in a three-dimensional warehouse according to claim 12, wherein the distance detection element (2) is mounted on each side in a width direction of the shuttle (1).

## Patentansprüche

1. Verfahren zum Prüfen von Objekten, die in einem dreidimensionalen Lager gelagert sind, umfassend die folgenden Schritte:
unter einer festgelegten Bedingung, Steuern einer Pendelvorrichtung (1), um sich zu einer Prüfposition zu bewegen;
Berechnen, ob eine Lage eines gelagerten Objekts (A), die der Prüfposition entspricht, geändert wurde; und
wenn die Lage des gelagerten Objekts (A) geändert wurde, Verwenden der Pendelvorrichtung (1), um das gelagerte Objekt (A) wegzunehmen und dann das gelagerte Objekt (A) zurück in seine ursprüngliche Position zu platzieren;
wobei die Prüfpositionen Positionen innerhalb eines Durchgangs (S) sind und die gelagerten Objekte (A) auf mindestens einer Seite jeder Prüfposition platziert sind;
wobei die Anzahl der gelagerten Objekte (A), die sich auf jeder Seite der Prüfposition befinden, zwei oder mehr beträgt, und
**dadurch gekennzeichnet, dass**
durch den folgenden Schritt bestimmt wird, ob sich die Lagen der Vielzahl von gelagerten Objekten (A), die sich auf einer Seite der Prüfposition befinden, geändert haben:
wenn sich die Lage eines gelagerten Objekts (A), das sich auf der einen Seite des Durchgangs (S) befindet, nicht geändert hat, Bestimmen, dass sich die Lage jedes gelagerten Objekts (A), das sich auf einer Seite des gelagerten Objekts (A) entfernt von dem Durchgang (S) befindet, nicht geändert hat.

2. Verfahren zum Prüfen von Objekten, die in einem dreidimensionalen Lager gelagert sind, nach Anspruch 1, wobei durch die folgenden Schritte berechnet wird, ob die Lage des gelagerten Objekts (A), die der Prüfposition entspricht, geändert wurde:
Berechnen von Abweichungsbeträgen und/oder eines Neigungswinkels (θ) des gelagerten Objekts (A);
Bestimmen, ob weder die Abweichungsbeträge noch der Neigungswinkel (θ) einen festgelegten Wert überschreiten; und
wenn einer der Abweichungsbeträge und der Neigungswinkel (θ) den festgelegten Wert überschreiten, Bestimmen, dass die Lage des gelagerten Objekts (A) geändert wurde.

3. Verfahren zum Prüfen von Objekten, die in einem dreidimensionalen Lager gelagert sind, nach Anspruch 1 oder 2, wobei der Neigungswinkel (θ) des gelagerten Objekts (A) durch die folgenden Schritte berechnet wird:
Erfassen eines ersten Abstands zwischen einer ersten Ecke des gelagerten Objekts (A), die der Prüfposition entspricht, und der Pendelvorrichtung (1), eines zweiten Abstands zwischen einer zweiten Ecke des gelagerten Objekts (A) und der Pendelvorrichtung (1), und eines dritten Abstands, um den sich die Pendelvorrichtung (1) von entsprechend der ersten Ecke des gelagerten Objekts (A) zu entsprechend der zweiten Ecke des gelagerten Objekts (A) bewegt; und
Berechnen des Neigungswinkels (θ) des gelagerten Objekts (A) basierend auf dem ersten Abstand (Δy1), dem zweiten Abstand (Δy2) und dem dritten Abstand (Δx1).

4. Verfahren zum Prüfen von Objekten, die in einem dreidimensionalen Lager gelagert sind, nach Anspruch 3, wobei die Abweichungsbeträge des gelagerten Objekts (A) durch den folgenden Schritt berechnet werden:
Berechnen der Abweichungsbeträge des gelagerten Objekts (A) basierend auf Koordinaten der Pendelvorrichtung (1) in einem Koordinatensystem des zu prüfenden gelagerten Objekts, Abmessungen des gelagerten Objekts (A), dem Neigungswinkel (θ) des gelagerten Objekts (A), dem ersten Abstand (Δy1) und dem zweiten Abstand (Δy2).

5. Verfahren zum Prüfen von Objekten, die in einem dreidimensionalen Lager gelagert sind, nach Anspruch 3 oder 4, wobei die erste Ecke (P1) eine Ecke des gelagerten Objekts (A) ist, die einem Durchgang (S) zugewandt ist, wo sich die Pendelvorrichtung (1) befindet, und die erste Ecke (P1) eine Ecke ist, wo die Pendelvorrichtung (1) das erste Mal passiert.

6. Verfahren zum Prüfen von Objekten, die in einem dreidimensionalen Lager gelagert sind, nach einem der Ansprüche 3 bis 5, wobei die zweite Ecke (P2) eine Ecke des gelagerten Objekts (A) ist, die dem Durchgang (S) zugewandt ist, wo sich die Pendelvorrichtung (1) befindet, und die zweite Ecke (P2) eine Ecke ist, wo die Pendelvorrichtung (1) das zweite Mal passiert.

7. Verfahren zum Prüfen von Objekten, die in einem dreidimensionalen Lager gelagert sind, nach einem der Ansprüche 3 bis 6, wobei ein gleiches Abstandserfassungselement (2) konfiguriert ist, um den ersten Abstand (Δy1) und den zweiten Abstand (Δy2) zu erfassen;
wobei das Abstandserfassungselement (2) ein Laserentfernungsmessmodul umfasst.

8. Verfahren zum Prüfen von Objekten, die in einem dreidimensionalen Lager gelagert sind, nach einem der Ansprüche 3 bis 7, wobei jede Seite der Pendelvorrichtung (1) mit einem Abstandserfassungselement (2) versehen ist und jedes Abstandserfassungselement (2) konfiguriert ist, um gelagerte Objekte (A) zu erfassen, die Prüfpositionen auf einer Seite des Durchgangs (S) entsprechen.

9. Verfahren zum Prüfen von Objekten, die in einem dreidimensionalen Lager gelagert sind, nach Anspruch 1, ferner umfassend die folgenden Schritte:
wenn die Lage eines gelagerten Objekts (A), das sich auf einer Seite des Durchgangs (S) befindet, geändert wurde, Nehmen des gelagerten Objekts (A), das sich in der Reihe befindet;
Bestimmen, ob die Lage des gelagerten Objekts (A), das sich in der nächsten Reihe befindet, geändert wurde; und
Wiederholen der obigen Schritte, bis die Bestimmung für jedes gelagerte Objekt (A) auf der einen Seite des Durchgangs (S) abgeschlossen ist.

10. Verfahren zum Prüfen von Objekten, die in einem dreidimensionalen Lager gelagert sind, nach Anspruch 1 oder 9, ferner umfassend die folgenden Schritte:
Verwenden der Pendelvorrichtung (1), um ein gelagertes Objekt (A) in der letzten Reihe wegzunehmen, von dem bestimmt wird, dass sich die Lage geändert hat, und dann dasselbe zurück in seine ursprüngliche Position zu platzieren, um eine Lagekorrektur des gelagerten Objekts (A) zu implementieren; und
Zurückplatzieren der gelagerten Objekte (A), die sich auf der einen Seite des Durchgangs (S) befinden, eins nach dem anderen, um die Lagekorrektur jedes gelagerten Objekts (A) auf der einen Seite des Durchgangs (S) abzuschließen.

11. Verfahren zum Prüfen von Objekten, die in einem dreidimensionalen Lager gelagert sind, nach einem der Ansprüche 1 bis 10, ferner umfassend den folgenden Schritt:
nachdem die Lagekorrektur jedes gelagerten Objekts (A), das der Prüfposition entspricht, abgeschlossen ist, Fahren der Pendelvorrichtung (1) zu der nächsten Prüfposition in Bezug auf die Prüfposition, um die Lagebestimmung von gelagerten Objekten (A) für jede Prüfposition zu erreichen.

12. System zum Prüfen von Objekten, die in einem dreidimensionalen Lager gelagert sind, umfassend:
eine Pendelvorrichtung (1);
eine Steuerung (4), die an der Pendelvorrichtung (1) montiert ist;
ein Abstandserfassungselement (2), das an der Pendelvorrichtung (1) montiert ist und kommunikativ mit der Steuerung (4) verbunden ist, um einen Abstand von der Pendelvorrichtung (1) zu einem gelagerten Objekt, das geprüft werden soll, zu erfassen;
ein Positionierungselement (3), das an der Pendelvorrichtung (1) montiert ist und kommunikativ mit der Steuerung (4) verbunden ist, so dass die Pendelvorrichtung (1) an einer festgelegten Prüfposition stoppt; und
ein Verschiebungserfassungselement (5), das an der Pendelvorrichtung (1) montiert ist und kommunikativ mit der Steuerung (4) verbunden ist, um einen dritten Abstand zu erfassen, der von der Pendelvorrichtung (1) bewegt wird;
**dadurch gekennzeichnet, dass** das System unter Verwendung eines Verfahrens nach einem der vorhergehenden Ansprüche arbeitet.

13. System zum Prüfen von Objekten, die in einem dreidimensionalen Lager gelagert sind, nach Anspruch 12, wobei das Abstandserfassungselement (2) auf jeder Seite in einer Breitenrichtung der Pendelvorrichtung (1) montiert ist.

## Revendications

1. Procédé d'inspection d'objets stockés dans un entrepôt tridimensionnel, comprenant les étapes suivantes :
dans une condition définie, commander une navette (1) pour se déplacer vers une position d'inspection ;
calculer si une attitude d'un objet stocké (A) correspondant à la position d'inspection a été modifiée ; et
si l'attitude de l'objet stocké (A) a été modifiée, utiliser la navette (1) pour enlever l'objet stocké (A) et ensuite placer l'objet stocké (A) de nouveau dans sa position d'origine ;
où les positions d'inspection sont des positions à l'intérieur d'un passage (S), et les objets stockés (A) sont placés sur au moins un côté de chaque position d'inspection ;
où le nombre des objets stockés (A) situés de chaque côté de la position d'inspection est de deux ou plus, et
**caractérisé en ce que**
le fait si les attitudes de la pluralité d'objets stockés (A) situés d'un côté de la position d'inspection ont été modifiées est déterminé par l'étape suivante :
si l'attitude d'un objet stocké (A) situé d'un côté du passage (S) n'a pas été modifiée, déterminer que l'attitude de chaque objet stocké (A) situé d'un côté de l'objet stocké (A) s'éloignant du passage (S) n'a pas été modifiée.

2. Procédé d'inspection d'objets stockés dans un entrepôt tridimensionnel selon la revendication 1, où le fait si l'attitude de l'objet stocké (A) correspondant à la position d'inspection a été modifiée est calculé par les étapes suivantes :
calculer des quantités d'écart et/ou un angle d'inclinaison (θ) de l'objet stocké (A) ;
déterminer si ni les quantités d'écart ni l'angle d'inclinaison (θ) ne dépassent une valeur définie ; et
si l'une quelconque des quantités d'écart et de l'angle d'inclinaison (θ) dépasse la valeur définie, déterminer que l'attitude de l'objet stocké (A) a été modifiée.

3. Procédé d'inspection d'objets stockés dans un entrepôt tridimensionnel selon la revendication 1 ou 2, où l'angle d'inclinaison (θ) de l'objet stocké (A) est calculé par les étapes suivantes :
détecter une première distance entre un premier coin de l'objet stocké (A) correspondant à la position d'inspection et la navette (1), une deuxième distance entre un deuxième coin de l'objet stocké (A) et la navette (1), et une troisième distance sur laquelle la navette (1) se déplace d'une position correspondant au premier coin de l'objet stocké (A) à une position correspondant au deuxième coin de l'objet stocké (A) ; et
calculer l'angle d'inclinaison (θ) de l'objet stocké (A) sur la base de la première distance (Δy1), de la deuxième distance (Δy2) et de la troisième distance (Δx1).

4. Procédé d'inspection d'objets stockés dans un entrepôt tridimensionnel selon la revendication 3, où les quantités d'écart de l'objet stocké (A) sont calculées par l'étape suivante :
calculer les quantités d'écart de l'objet stocké (A) sur la base de coordonnées de la navette (1) dans un système de coordonnées de l'objet stocké en cours d'inspection, de dimensions de l'objet stocké (A), de l'angle d'inclinaison (θ) de l'objet stocké (A), de la première distance (Δy1) et de la deuxième distance (Δy2).

5. Procédé d'inspection d'objets stockés dans un entrepôt tridimensionnel selon la revendication 3 ou 4, où le premier coin (P1) est un coin de l'objet stocké (A) tourné vers un passage (S) où la navette (1) est située, et le premier coin (P1) est un coin où la navette (1) passe pour la première fois.

6. Procédé d'inspection d'objets stockés dans un entrepôt tridimensionnel selon l'une quelconque des revendications 3 à 5, où le deuxième coin (P2) est un coin de l'objet stocké (A) tourné vers le passage (S) où la navette (1) est située, et le deuxième coin (P2) est un coin où la navette (1) passe pour la deuxième fois.

7. Procédé d'inspection d'objets stockés dans un entrepôt tridimensionnel selon l'une quelconque des revendications 3 à 6, où un même élément de détection de distance (2) est configuré pour détecter la première distance (Δy1) et la deuxième distance (Δy2) ;
où l'élément de détection de distance (2) comprend un module de télémétrie laser.

8. Procédé d'inspection d'objets stockés dans un entrepôt tridimensionnel selon l'une quelconque des revendications 3 à 7, où chaque côté de la navette (1) est pourvu d'un élément de détection de distance (2), et chaque élément de détection de distance (2) est configuré pour détecter des objets stockés (A) correspondant à des positions d'inspection sur un côté du passage (S).

9. Procédé d'inspection d'objets stockés dans un entrepôt tridimensionnel selon la revendication 1, comprenant en outre les étapes suivantes :
si l'attitude d'un objet stocké (A) situé d'un côté du passage (S) a été modifiée, prendre l'objet stocké (A) situé dans la rangée ;
déterminer si l'attitude de l'objet stocké (A) situé dans la rangée suivante a été modifiée ; et
répéter les étapes ci-dessus jusqu'à ce que la détermination pour chaque objet stocké (A) d'un côté du passage (S) soit terminée.

10. Procédé d'inspection d'objets stockés dans un entrepôt tridimensionnel selon la revendication 1 ou 9, comprenant en outre les étapes suivantes :
utiliser la navette (1) pour enlever un objet stocké (A), dans la dernière rangée, dont l'attitude est déterminée comme ayant été modifiée, et ensuite le placer de nouveau dans sa position d'origine pour mettre en œuvre une correction d'attitude de l'objet stocké (A) ; et
placer de nouveau les objets stockés (A) situés d'un côté du passage (S) un par un pour compléter la correction d'attitude de chaque objet stocké (A) d'un côté du passage (S).

11. Procédé d'inspection d'objets stockés dans un entrepôt tridimensionnel selon l'une quelconque des revendications 1 à 10, comprenant en outre l'étape suivante :
après que la correction d'attitude de chaque objet stocké (A) correspondant à la position d'inspection est terminée, déplacer la navette (1) vers la position d'inspection suivante par rapport à la position d'inspection pour accomplir la détermination d'attitude des objets stockés (A) pour chaque position d'inspection.

12. Système d'inspection d'objets stockés dans un entrepôt tridimensionnel, comprenant :
une navette (1) ;
un contrôleur (4) monté sur la navette (1) ;
un élément de détection de distance (2) monté sur la navette (1) et connecté en communication au contrôleur (4) pour détecter une distance de la navette (1) à un objet stocké à inspecter ;
un élément de positionnement (3) monté sur la navette (1) et connecté en communication au contrôleur (4) de sorte que la navette (1) s'arrête vers une position d'inspection définie ; et
un élément de détection de déplacement (5) monté sur la navette (1) et connecté en communication au contrôleur (4) pour détecter une troisième distance déplacée par la navette (1) ;
**caractérisé en ce que** le système fonctionne en utilisant un procédé selon l'une quelconque des revendications précédentes.

13. Système d'inspection d'objets stockés dans un entrepôt tridimensionnel selon la revendication 12, où l'élément de détection de distance (2) est monté de chaque côté dans une direction de largeur de la navette (1).
